(19) Europäisches Patentamt
European Patent Office
Office européen des brevets

(11) **EP 4 350 581 A1**

(12) **EUROPEAN PATENT APPLICATION**
published in accordance with Art. 153(4) EPC

(43) Date of publication:
**10.04.2024 Bulletin 2024/15**

(21) Application number: **21944314.0**

(22) Date of filing: **21.10.2021**

(51) International Patent Classification (IPC):
**G06N 3/063** (2006.01)     **G06F 7/523** (2006.01)
**G06F 7/50** (2006.01)     **G06F 17/16** (2006.01)

(52) Cooperative Patent Classification (CPC):
**G06F 7/50; G06F 7/523; G06F 17/16; G06N 3/063**

(86) International application number:
**PCT/KR2021/014771**

(87) International publication number:
**WO 2022/255561 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.06.2021 KR 20210072676**

(71) Applicant: **Openedges Technology, Inc.
Seoul 06252 (KR)**

(72) Inventor: **JUNG, Tae-Young
Seoul 04709 (KR)**

(74) Representative: **Dehns
St. Bride's House
10 Salisbury Square
London EC4Y 8JD (GB)**

(54) **HIGH-EFFICIENCY POOLING METHOD AND DEVICE THEREFOR**

(57) Disclosed is a pooling method for pooling input data, which may be expressed as a matrix, by means of pooling window having a size represented by the respective rowdirectional and column-directional sizes $R_p$ and $C_p$, the pooling method comprising the steps of: generating temporary data by pooling input data using a first pooling window having a size of $C_p$; generating pooled data by pooling the temporary data using a second pooling window (30) having a size of $R_p$.

[Fig 7]

EP 4 350 581 A1

**Description**

## TECHNICAL FIELD

The present invention relates to a method of performing pooling in a computing device and a hardware accelerator to which the method is applied.

## BACKGROUND ART

A convolutional neural network (CNN) performs a plurality of computational steps including a pooling operation. US Patent No. US10713816 discloses an object detection method using a deep CNN pooling layer as a feature.

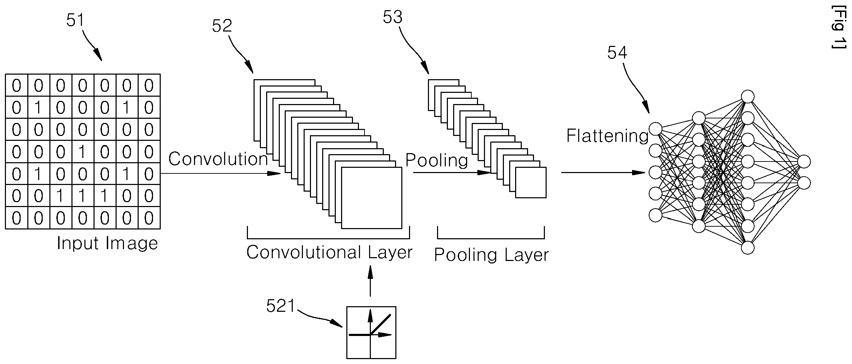

FIG. 1 illustrates a computational structure of the CNN according to one embodiment. Hereinafter, a description will be given with reference to FIG. 1.

First, convolutional layers 52 may be generated by performing a convolution operation using a plurality of kernels on input image data 51 stored in an internal memory. A step of generating the convolutional layers 52 may include performing a non-linear operation (e.g., ReLU, Sigmoid, or tanH) on a plurality of feature maps obtained as a result of performing the convolution operation.

Then, pooling layers 53 may be generated by performing pooling on the convolutional layers 52. Each convolutional layer 52 may include data capable of being expressed in the form of an M*N matrix. In this case, in order to perform pooling, a pooling window, which is a window with a smaller dimension than the convolutional layer 52, may be defined. The pooling window may have sizes of $M_p$ and $N_p$ in row and column directions, respectively. The size of the pooling window may be smaller than the size of the convolutional layer ($M \geq M_p$ and $N > N_p$, or $M > M_p$ and $N \geq N_p$). The pooling is an operation for generating a smaller number of data, for example, one piece of data, from $M_p * N_p$ pieces of data selected by overlapping the pooling window on the convolutional layer. For example, MAX pooling is an operation for selecting and outputting the largest value among the $M_p * N_p$ pieces of data. For example, Average pooling is an operation for outputting an average value of the $M_p * N_p$ pieces of data. Pooling that follows other rules may be defined. The number of cases in which the pooling window is able to be overlapped with the convolutional layer varies. Depending on embodiments, rules for moving the pooling window on the convolutional layer may be limited. For example, when the pooling window is limited so that it moves while skipping $S_M$ spaces along a row direction of the convolutional layer, a row stride of the pooling operation may be referred as $S_M$, and when the pooling window is limited so that it moves while skipping $S_N$ spaces along a column direction of the convolutional layer, a column stride of the pooling operation may be referred to as $S_N$ ($S_M$ and $S_N$ are natural numbers). As the size of the stride increases, the size of the pooling layer output as a result of the pooling operation may become smaller. In addition to the above description, the specific concept of the pooling operation is well presented in related art describing the CNN.

Then, flattening may be performed on the pooling layers 53 to create an array to be input to a neural network 54.

Then, the array may be input into the neural network 54 to generate an output from the neural network 54.

FIG. 1 shows one embodiment of the CNN, but there are various other examples of implementing the CNN. In addition, although the pooling operation is used to implement the CNN in FIG. 1, the pooling operation may also be used in other computing technology fields other than the CNN.

The amount of computation for pooling operations tends to increase as the size of the pooling window increases, and tends to decrease as the size of the stride becomes smaller. In addition, the smaller the size of the stride, the more likely it is that the tendency to repeat the same operation increases in a process of performing the pooling operation.

## DISCLOSURE OF THE INVENTION

## TECHNICAL PROBLEM

The present invention is intended to provide a pooling method for reducing the amount of computation for pooling operations.

## TECHNICAL SOLUTION

According to one aspect of the present invention, there is provided a pooling method for pooling input data (100) expressible as a matrix using a pooling window (10) having sizes of $R_p$ and $C_p$ in a row direction and a column direction, respectively. The pooling method includes generating, by a computing device, temporary data (110) by pooling the input data (100) using a first pooling window (20) having a size of $C_p$ and generating, by the computing device, pooled data (200) by pooling the temporary data (110) using a second pooling window (30) having a size of $R_p$.

In this case, the first pooling window (20) may be a window having sizes of 1 and $C_p$ in the row direction and the column direction, respectively, and the second pooling window (30,31) may be a window having sizes of $R_p$ and 1 in the row direction and the column direction, respectively.

In this case, the generating of the pooled data (200) may include generating, by the computing device, transpose data (120) by transposing the temporary data (110), generating, by the computing device, second temporary data (130) by pooling the transposing data (120) using the second pooling window (30,32), and generating, by the computing device, the pooled data (200) by transposing the second temporary data (130).

In this case, the first pooling window (20) may be a window having sizes of 1 and $C_p$ in the row direction and the column direction, respectively, and the second pooling window (30,32) may be a window having sizes of 1 and $R_p$ in the row direction and the column direction, respectively.

Alternatively, the input data (100) may have sizes of R and C in the row direction and the column direction, respectively, the temporary data (110) may have sizes of $C-C_p+1$ and R in the row direction and the column direction, respectively, the pooled data (200) may have sizes of $R-R_p+1$ and $C-C_p+1$ in the row direction and the column direction, respectively, data pooled by overlapping element pairs $\{(i,j), (i,j+1), ... (i,j+C_P-1)\}$ of the input data (100) and the first pooling window (20) may be stored in an element (j,i) of the temporary data (110) (i is a row index and j is a column index), and data pooled by overlapping element pairs $\{ (i,j), (i,j+1), ..., (i,j+R_p-1)\}$ of the temporary data (110) and the second pooling window (30,32) may be stored in an element (j,i) of the pooled data (200) (i is a row index and j is a column index).

In this case, the first pooling window (20) may be a window having sizes of 1 and $C_p$ in the row direction and the column direction, respectively, and the second pooling window (30,32) may be a window having sizes of 1 and $R_p$ in the row direction and the column direction, respectively.

In this case, a row stride and a column stride of the first pooling window may be 1 and 1, respectively.

In this case, a row stride and a column stride of the second pooling window may be 1 and 1, respectively.

In this case, the predetermined pooling may be any one of MAX pooling, MIN pooling, and Average pooling. The present invention is not limited by specific input/output characteristics of the pooling.

In this case, a row stride of the first pooling window may be $R_p/2$ or less, a column stride of the first pooling window may be $C_p/2$ or less, a row stride of the second pooling window may be $R_p/2$ or less, and a column stride of the third pooling window may be $C_p/2$ or less.

The pooling method may be executed by the computing device by software including an instruction code. In this case, the input data, the temporary data, the pooled data, the transpose data, and the second temporary data may be recorded in a memory space defined in a volatile memory of the computing device by the command code. Some of them may, if desired, be stored in a non-volatile memory of the computing device.

According to another aspect of the present invention, there is provided a hardware accelerator performing a pooling method for pooling input data (100) expressible as a matrix using a pooling window (10) having sizes of $R_p$ and $C_p$ in a row direction and a column direction, respectively. The hardware accelerator includes a controller (40), an internal memory (30), and a data operator (610). The controller is configured to cause the data operator to perform operations of generating temporary data (110) by pooling the input data (100) using a first pooling window (20) having a size of $C_p$ in a first time period; and generating pooled data (200) by pooling the temporary data (110) using a second pooling window (30) having a size of $R_p$ in a second time period after the first time period.

In this case, the input data (100) may have sizes of R and C in the row direction and the column direction, respectively, the temporary data (110) may have sizes of $C-C_p+1$ and R in the row direction and the column direction, respectively, the pooled data (200) may have sizes of $R-R_p+1$ and $C-C_p+1$ in the row direction and the column direction, respectively, data pooled by overlapping element pairs $\{(i,j), (i,j+1), ... (i,j+C_P-1)\}$ of the input data (100) and the first pooling window (20) may be stored in an element (j,i) of the temporary data (110) (i is a row index and j is a column index), and data pooled by overlapping element pairs $\{ (i,j), (i,j+1), ..., (i,j+R_p-1)\}$ of the temporary data (110) and the second pooling window (30,32) may be stored in an element (j,i) of the pooled data (200) (i is a row index and j is a column index).

In this case, the first pooling window (20) may be a window having sizes of 1 and $C_p$ in the row direction and the column direction, respectively, and the second pooling window (30,32) may be a window having sizes of 1 and $R_p$ in the row direction and the column direction, respectively.

A computing device provided according to another aspect of the present invention includes the hardware accelerator, a memory (11), and a bus (700) that is a data exchange path between the memory and the hardware accelerator.

## ADVANTAGEOUS EFFECTS

According to the present invention, it is possible to provide a pooling operation method with a reduced amount of computation.

## BRIEF DESCRIPTION OF THE DRAWINGS

FIG. 1 illustrates a computational structure of a convolutional neural network (CNN) according to one embodiment.

FIGS. 2a to 2c illustrate a pooling method provided according to one embodiment.

FIGS. 3a to 3f illustrate a pooling method provided according to one embodiment of the present invention.

FIGS. 4a to 4h illustrate a pooling method provided according to another embodiment of the present invention.

FIGS. 5a to 5f illustrate a pooling method provided according to still another embodiment of the present invention.

FIG. 6 illustrates an example of a hardware configuration to which a pooling method provided according to one embodiment of the present invention is applicable.

FIG. 7 illustrates a method for implementing the pooling method presented in FIG. 3 or FIG. 5 with the hardware presented in FIG. 6.

FIG. 8 illustrates an example of implementing the pooling method presented in FIG. 5 using a data operator with a pipeline operation structure.

FIGS. 9a to 9d illustrate a method for implementing the pooling method presented in FIG. 4 with the hardware presented in FIG. 6.

## MODE FOR CARRYING OUT THE INVENTION

Hereinafter, embodiments of the present disclosure will be described with reference to the drawings. However, the present disclosure is not limited to the embodiments described herein, and may be implemented in various other forms. The terms used herein are intended to aid understanding of the embodiments, and are not intended to limit the scope of the present disclosure. In addition, the singular forms used hereinafter include plural forms unless otherwise clearly expressed.

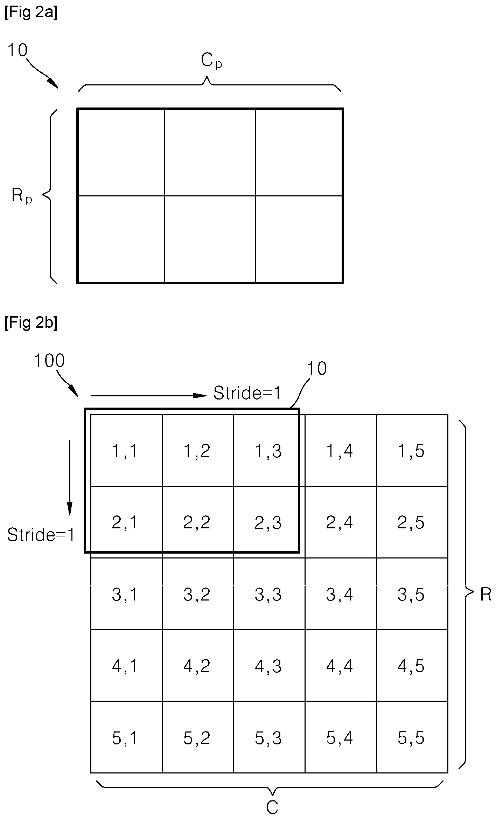

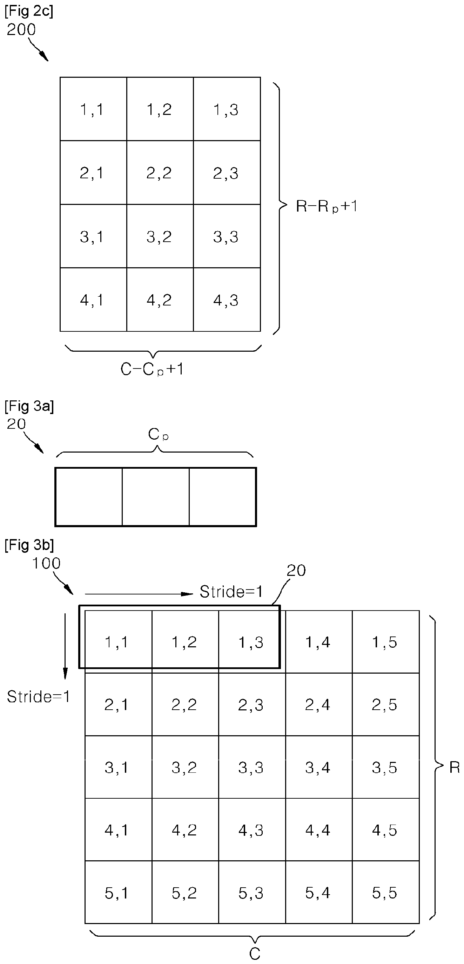

FIGS. 2a to 2c illustrate a pooling method provided according to one embodiment. Hereinafter, FIGS. 2a to 2c may be collectively referred to as FIG. 2.

FIG. 2a illustrates a pooling window 10 having sizes of $R_p$ and $C_p$ in a row direction and a column direction, respectively. Hereinafter, the box drawn with a thick line in FIG. 2 represents the pooling window 10.

FIG. 2b illustrates that the pooling window 10 overlaps input data 100 to be pooled by the pooling window 10 of FIG. 2a. The input data 100 has sizes of R and C in the row direction and the column direction, respectively.

In the example illustrated in FIG. 2b, the pooling window 10 moves by one space in the row direction (row stride = 1) and moves by one space in the column direction (column stride = 1), with respect to the input data 100.

FIG. 2c illustrates pooled data 200 obtained by pooling the input data 100 using the pooling window 10. The pooled data 200 has sizes of $R-R_p+1$ and $C-C_p+1$ in the row direction and the column direction, respectively.

FIG. 2b illustrates a state in which the pooling window 10 covers elements {(1,1), (1,2), (1,3), (2,1), (2,2), (2,3)} of the input data 100. In this case, when the pooling is MAX pooling, an element (1,1) of the pooled data 200 may be equal to the largest value among the elements {(1,1), (1,2), (1,3), (2,1), (2,2), (2,3)} of the input data 100. That is, an element (x,y) of the pooled data 200 may be equal to the largest value among the elements {(x,y), (x,y+1), (x,y+2), (x+1,y), (x+1,y+1), (x+1,y+2)} of the input data 100.

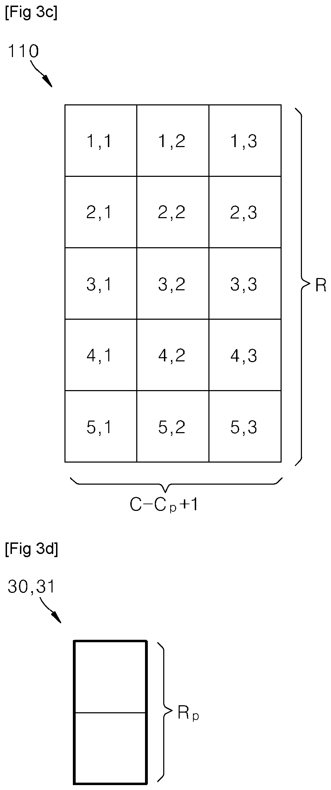

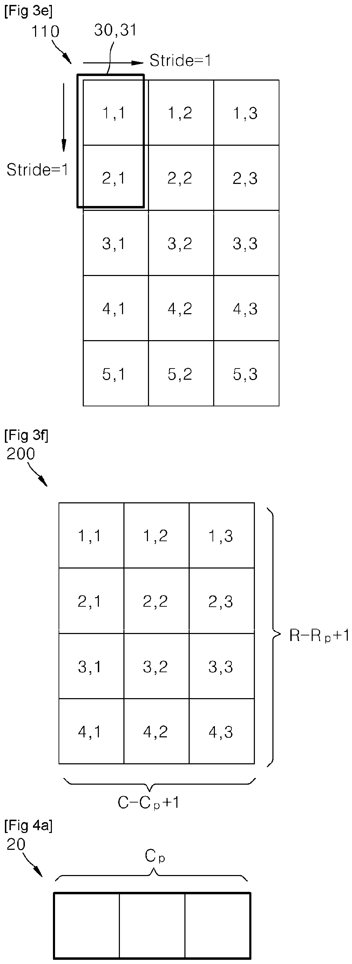

FIGS. 3a to 3f illustrate a pooling method provided according to one embodiment of the present invention. Hereinafter, FIGS. 3a to 3f may be collectively referred to as FIG. 3.

The pooling method illustrated in FIG. 3 is intended to provide the same results as the pooling method illustrated in FIG. 2, and may provide the same results. Hereinafter, a description will be given with reference to FIG. 3.

FIG. 3a illustrates a first pooling window 20 having sizes of 1 and $C_p$ in a row direction and a column direction, respectively. In this case, the size $C_p$ of the first pooling window 20 in the column direction is selected to be the same as the size $C_p$ of the pooling window 10 in the column direction.

Hereinafter, boxes drawn with a thick line in FIGS. 3a and 3b represent the first pooling window 20, and boxes drawn with a thick line in FIGS. 3d and 3e represent a second pooling window 30,31.

FIG. 3b illustrates that the first pooling window 20 overlaps the input data 100. The input data 100 in FIG. 3b is the same as the input data 100 in FIG. 2b.

In the example illustrated in FIG. 3b, the first pooling window 20 moves by one space in the row direction (row stride = 1) and moves by one space in the column direction (column stride = 1), with respect to the input data 100.

FIG. 3c illustrates temporary data 110 obtained by pooling the input data 100 using the first pooling window 20. The temporary data 110 has sizes of R and $C-C_p+1$ in the row direction and the column direction, respectively.

FIG. 3b illustrates a state in which the first pooling window 20 covers elements {(1,1), (1,2), (1,3)} of the input data 100.

In this case, the pooling method by the first pooling window 20 and the pooling method by the pooling window 10 are the same. For example, when the pooling by the pooling window 10 is MAX pooling, the pooling by the first pooling window 20 is also MAX pooling. Further, in this time, an element (1,1) of the temporary data 110 may be equal to the largest value among the elements {(1,1), (1,2), (1,3)} of the input data 100. That is, an element (x,y) of the temporary data 110 may be equal to the largest value among the elements {(x,y), (x,y+1), (x,y+2)} of the input data 100.

FIG. 3d illustrates a second pooling window 30,31 having sizes of $R_p$ and 1 in the row direction and the column direction, respectively. In this case, the size $R_P$ of the second pooling window 30,31 in the row direction is selected to be the same as the size $R_P$ of the pooling window 10 in the row direction.

FIG. 3e illustrates that the second pooling window 30,31 overlaps the temporary data 110.

In the example illustrated in FIG. 3e, the second pooling window 30,31 moves by one space in the row direction (row stride = 1) and moves by one space in the column direction (column stride = 1), with respect to the temporary data 110.

FIG. 3f illustrates pooled data 200 obtained by pooling the temporary data 110 using the second pooling window 30,31. The pooled data 200 has sizes of $R-R_p+1$ and $C-C_p+1$ in the row direction and the column direction, respectively.

In this case, the pooling method by the second pooling window 30,31 and the pooling method by the pooling window 10 are the same. For example, when the pooling by the pooling window 10 is MAX pooling, the pooling by the second pooling window 30,31 is also MAX pooling. Further, in this time, the element (1,1) of the pooled data 200 may be equal to the largest value among the elements {(1,1), (2,1)} of the temporary data 110. That is, the element (x,y) of the pooled data 200 may be equal to the largest value among the elements {(x,y), (x,y), (x+1,y)} of the temporary data 110.

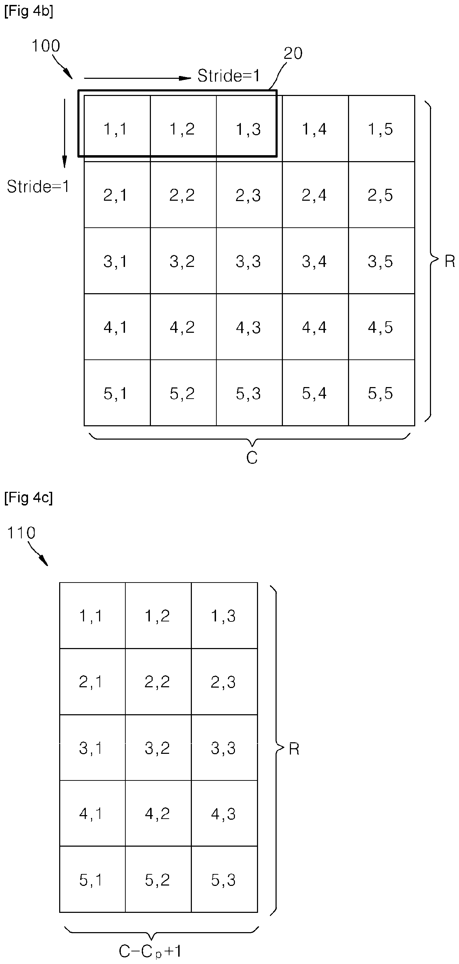

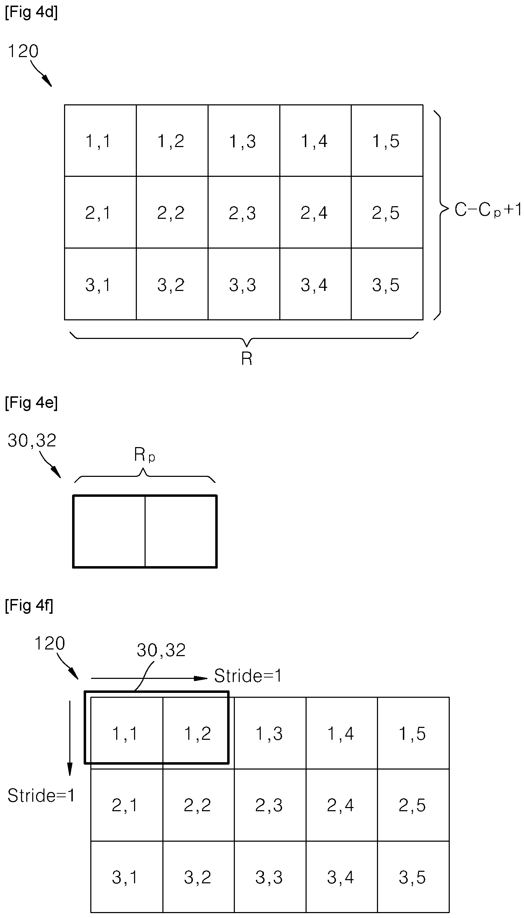

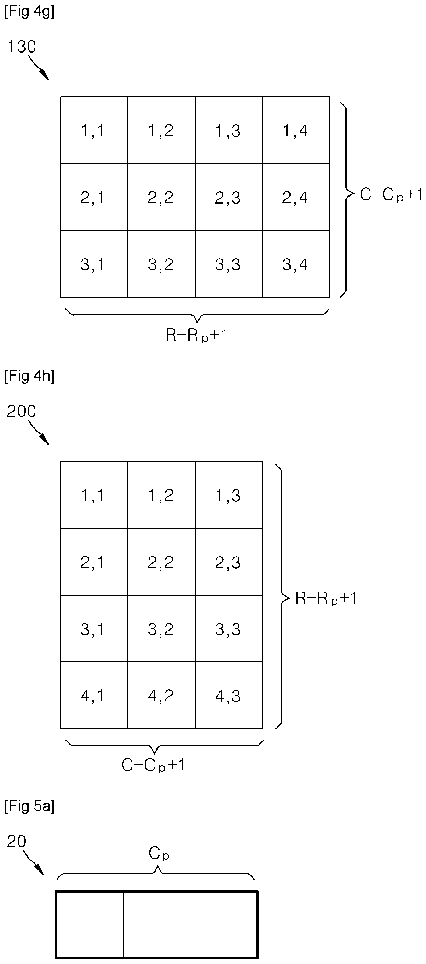

FIGS. 4a to 4h illustrate a pooling method provided according to another embodiment of the present invention. Hereinafter, FIGS. 4a to 4h may be collectively referred to as FIG. 4.

The pooling method illustrated in FIG. 4 is intended to provide the same results as the pooling method illustrated in FIG. 2, and may provide the same results. Hereinafter, a description will be given with reference to FIG. 4.

FIG. 4a illustrates a first pooling window 20 having sizes of 1 and $C_p$ in a row direction and a column direction, respectively. In this case, the size $C_P$ of the first pooling window 20 in the column direction is selected to be the same as the size $C_P$ of the pooling window 10 in the column direction. The first pooling window 20 illustrated in FIG. 4a is the same as the first pooling window 20 illustrated in FIG. 3a.

Hereinafter, boxes drawn with a thick line in FIGS. 4a and 4b represent the first pooling window 20, and boxes drawn with a thick line in FIGS. 4e and 4f represent a second pooling window 30,32.

FIG. 4b illustrates that the first pooling window 20 overlaps the input data 100. The input data 100 in FIG. 4b is the same as the input data 100 in FIG. 2b.

In the example illustrated in FIG. 4b, the first pooling window 20 moves by one space in the row direction (row stride = 1) and moves by one space in the column direction (column stride = 1), with respect to the input data 100.

FIG. 4c illustrates temporary data 110 obtained by pooling the input data 100 using the first pooling window 20. The temporary data 110 has sizes of R and $C-C_p+1$ in the row direction and the column direction, respectively.

FIG. 4b illustrates a state in which the first pooling window 20 covers elements {(1,1), (1,2), (1,3)} of the input data 100.

It can be understood that FIGS. 4a, 4b, and 4c are the same as FIGS. 3a, 3b, and 3c, respectively.

Like that described in FIG. 3, the pooling method by the first pooling window 20 and the pooling method by the pooling window 10 are the same.

FIG. 4d is transpose data 120 generated by transposing the temporary data 110. That is, the element (x,y) of the temporary data 110 have the same values as the element (y,x) of the transpose data 120. The transpose data 120 has sizes of $C-C_p+1$ and R in the row direction and the column direction, respectively.

FIG. 4e illustrates a second pooling window 30,32 having sizes of 1 and $R_p$ in the row direction and the column direction, respectively. In this case, the size $R_P$ of the second pooling window 30,32 in the column direction is selected to be the same as the size $R_P$ of the pooling window 10 in the row direction.

The second pooling window 30,32 illustrated in FIG. 4e and the second pooling window 30,31 illustrated in FIG. 3d have a common point and a different point as described below. That is, the second pooling window 30,32 illustrated in FIG. 4e and the second pooling window 30,31 illustrated in FIG. 3d have it in common in that they are both one-dimensional arrays having the same size as the size $R_P$ of the pooling window 10 in the row direction. In addition, the different point is that the second pooling window 30,32 illustrated in FIG. 4e extends along the column direction, while the second pooling window 30,31 illustrated in FIG. 3d extends along the row direction.

FIG. 4f illustrates that the second pooling window 30,32 overlaps the transpose data 120.

In the example illustrated in FIG. 4f, the second pooling window 30,32 moves by one space in the row direction (row stride = 1) and moves by one space in the column direction (column stride = 1), with respect to the transpose data 120.

FIG. 4g illustrates second temporary data 130 obtained by pooling the transpose data 120 using the second pooling window 30,32. The second temporary data 130 has sizes of $C-C_p+1$ and $R-R_p+1$ in the row direction and the column direction, respectively.

In this case, the pooling method by the second pooling window 30,32 and the pooling method by the pooling window 10 are the same. For example, when the pooling by the pooling window 10 is MAX pooling, the pooling by the second pooling window 30,32 is also MAX pooling. Further, in this case, the element (1,1) of the second temporary data 130 may be equal to the largest value among the elements {(1,1), (1,2)} of the transpose data 120. That is, the element (x,y) of the second temporary data 130 may be equal to the largest value among the elements {(x,y), (x+1,y)} of the transpose data 120.

FIG. 4h is pooled data 200 generated by transposing the second temporary data 130. That is, the element (x,y) of the second temporary data 130 has the same value as the element (y,x) of the pooled data 200. The pooled data 200 has sizes of $R-R_p+1$ and $C-C_p+1$ in the row direction and the column direction, respectively.

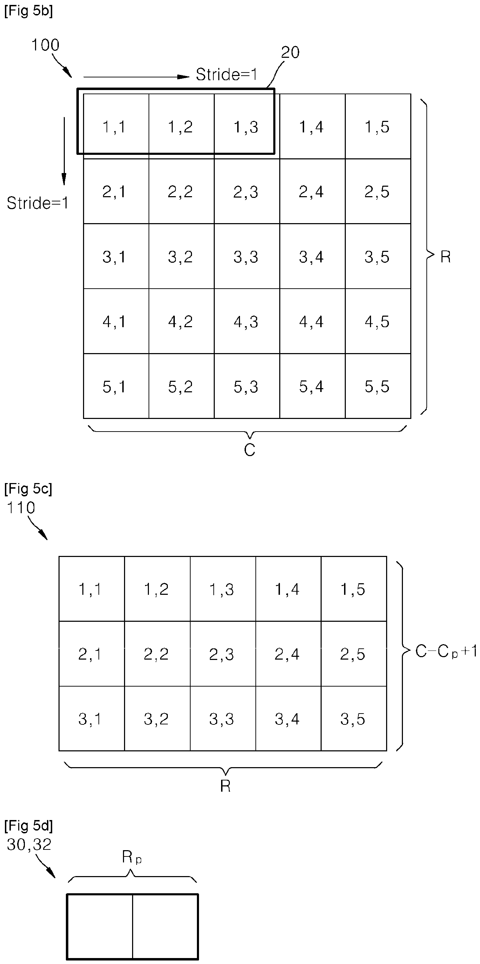

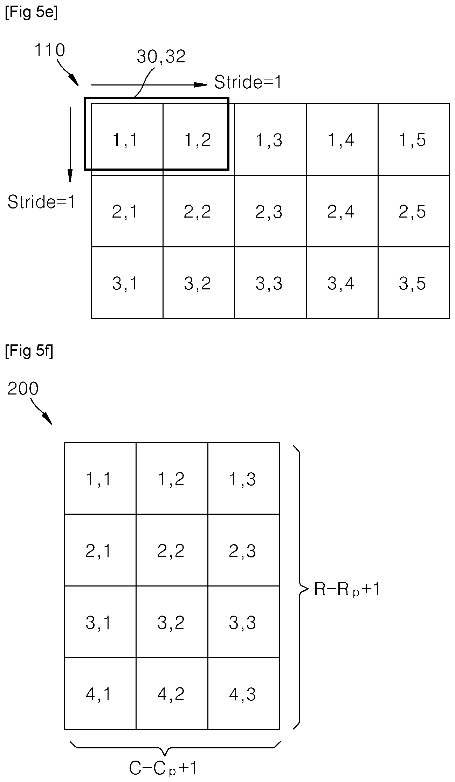

FIGS. 5a to 5f illustrate a pooling method provided according to still another embodiment of the present invention. Hereinafter, FIGS. 5a to 5f may be collectively referred to as FIG. 5.

The pooling method illustrated in FIG. 5 is intended to provide the same results as the pooling method illustrated in FIG. 2, and may provide the same results. Hereinafter, a description will be given with reference to FIG. 5.

FIG. 5a illustrates a first pooling window 20 having sizes of 1 and $C_p$ in a row direction and a column direction, respectively. In this case, the size $C_P$ of the first pooling window 20 in the column direction is selected to be the same as the size $C_P$ of the pooling window 10 in the column direction. The first pooling window 20 illustrated in FIG. 5a is the same as the first pooling window 20 illustrated in FIG. 3a.

Hereinafter, boxes drawn with a thick line in FIGS. 5a and 5b represent the first pooling window 20, and boxes drawn with a thick line in FIGS. 5d and 5e represent a second pooling window 30,32.

FIG. 5b illustrates that the first pooling window 20 overlaps the input data 100. The input data 100 in FIG. 5b is the same as the input data 100 in FIG. 2b. FIG. 5b illustrates a state in which the first pooling window 20 overlaps elements {(1,1), (1,2), (1,3)} of the input data 100.

In the example illustrated in FIG. 5b, the first pooling window 20 moves by one space in the row direction (row stride = 1) and moves by one space in the column direction (column stride = 1), with respect to the input data 100.

In one preferred embodiment, pooling may be performed using the first pooling window 20 while preferentially increasing a row number (row index number) of the input data 100 overlapped with the first pooling window 20 over a column number (column index number). That is, pooling is performed while increasing the row number of the input data 100 overlapped with the first pooling window 20 in a state in which the column number thereof is fixed.

For example, when the above preferred embodiment is applied to the input data 100 of FIG. 5b, first, pooling using the first pooling window 20 may be performed a total of five times while increasing the row number from 1,2,3,4,5 in a state in which the column number of the input data 100 overlapped with the first pooling window 20 is fixed to {1, 2, 3}. Then, pooling using the first pooling window 20 may be additionally performed a total of five times while increasing the row number from 1,2,3,4,5 in a state in which the column number of the input data 100 overlapped with the first pooling window 20 is increased by stride 1 to {2, 3, 4}. This process may be repeated while increasing the column number.

FIG. 5c illustrates temporary data 110 obtained by pooling the input data 100 using the pooling window 10.

A memory space for storing the temporary data 110 may be prepared in advance.

The total number of rows of the memory space, that is, the total number of rows of the temporary data 110, may be equal to the total number of states in which the first pooling window 20 may overlap a specific row of the input data 100. In other words, the total number of rows in the memory space may be equal to the total number of cases in which the first pooling window 20 overlapping the input data 100 may be disposed along a longitudinal direction of the rows. For example, in FIG. 5b, when the first pooling window 20 overlaps the first row of the input data 100, the first pooling window 20 may overlap the 11th element pairs {(1,1), (1,2), (1,3)} of the input data 100, the 12th element pairs {(1,2), (1,3), (1,4)}, or the 13th element pairs {(1,3), (1,4), (1,5)}. That is, since the total number of states in which the first pooling window 20 may overlap a specific row of the input data 100 is three, the total number of rows in the memory space is three. That is, the total number of rows of the temporary data 110 is three.

In addition, the total number of columns of the memory space, that is, the total number of columns of the temporary data 110, may be equal to the total number of states in which the first pooling window 20 may overlap a specific pair of columns of the input data 100. In other words, the total number of columns in the memory space may be equal to the total number of cases in which the first pooling window 20 overlapping the input data 100 may be disposed along a longitudinal direction of the columns. For example, in FIG. 5b, when the first pooling window 20 overlaps the first column, second column, and third column of the input data 100, the first pooling window 20 may overlap the 11th element pairs {(1,1), (1,2), (1,3)} of the input data 100, the 21st element pairs {(2,1), (2,2), (2, 3)}, the 31st element pairs {(3,1), (3,2), (3,3)}, the 41st element pairs {(4,1), (4,2), (4,3)} or the 51th element pairs {(5,1), (5,2), (5,3)}. That is, since the total number of states in which the first pooling window 20 may overlap a pair of specific columns of the input data 100 is five, the total number of columns in the memory space is five. That is, the total number of columns of the temporary data 110 is five.

As illustrated in FIG. 5b, when using the first pooling window 20 having sizes of 1 and $C_p$ in the row direction and the column direction, respectively, to move the input data 100 having sizes of R and C in the row direction and the column direction, respectively, by one space in the row direction (row stride = 1) and by one space in the column direction (column stride = 1), the temporary data 110 has sizes of $C-C_p+1$ and R in the row direction and the column direction, respectively.

In one preferred embodiment, data pooled by overlapping the first pooling window 20 and the element pairs {(i,j), (i,j+1), (i,j+2)} of the input data 100 is stored in an element (j,i) of the temporary data 110. Here, i is a row index and j is a column index.

In one preferred embodiment, when both conditions below are met, the value of each element of the temporary data 110 may be determined while preferentially increasing the column number of the temporary data 110 over the row number.

* First condition: As descried in FIG. 5b, a condition for performing pooling using the first pooling window 20 while preferentially increasing the row number of the input data 100 overlapped with the first pooling window 20 over the column number.

* Second condition: A condition for storing data pooled by overlapping the first pooling window 20 and the element pairs {(i,j), (i,j+1), (i,j+2)} of the input data 100 in the element (j,i) of the temporary data 110.

In this case, the pooling method by the pooling window 10 in FIG. 2 is the same as the pooling method by the first pooling window 20 in FIG. 5. For example, when the pooling method by the pooling window 10 is MAX pooling, the pooling method by the first pooling window 20 is also MAX pooling. For another example, when the pooling method by the pooling window 10 is Average pooling, the pooling method by the first pooling window 20 is also Average pooling.

The dimension and its value of the temporary data 110 presented in FIG. 5c may be the same as the dimension and its value of the transpose data 120 presented in FIG. 4d.

A computing device provided according to one embodiment of the present invention may store a plurality of elements included in one specific row of temporary data 110 presented in FIG. 5c in a burst manner in a memory such as a buffer, register, SR_AM, or DRAM. That is, a plurality of elements included in one specific row of the temporary data 110 may be stored in one word of the memory.

FIG. 5d illustrates the second pooling window 30,32 having sizes of 1 and $R_p$ in the row direction and the column direction, respectively. In this case, the size $R_P$ of the second pooling window 30,32 in the column direction is selected to be the same as the size $R_P$ of the pooling window 10 in the row direction in FIG. 2.

The second pooling window 30,32 illustrated in FIG. 5d and the second pooling window 30,31 illustrated in FIG. 3d have a common point and a different point as described below. That is, the second pooling window 30,32 illustrated in FIG. 5d and the second pooling window 30,31 illustrated in FIG. 3d have it in common in that they are both one-dimensional arrays having the same size as the size $R_P$ of the pooling window 10 in the row direction. In addition, the different point is that the second pooling window 30,32 illustrated in FIG. 5d extends along the column direction, while the second pooling window 30,31 illustrated in FIG. 3d extends along the row direction.

FIG. 5e illustrates in a state in which the second pooling window 30,32 overlaps the 11th element pairs {(1,1), (1,2)} of the temporary data 110.

In this case, as presented in FIG. 5e, in order to pool the temporary data 110 using the second pooling window 30,32, the computing device provided according to one embodiment of the present invention may read the temporary data 110 stored in the memory. In one preferred embodiment, the computing device may be configured to read another row after reading all of the specific row of the temporary data 110. This is because when reading the temporary data 110 from the memory, the computing device may read the temporary data 110 in word units, and thus, in this case, another row is read after all of the specific row of the temporary data 110 has been read.

In the example illustrated in FIG. 5e, the second pooling window 30,32 moves by one space in the row direction (row stride = 1) and moves by one space in the column direction (column stride = 1), with respect to the temporary data 110.

In one preferred embodiment, pooling may be performed using the second pooling window 30,32 while preferentially increasing a column number (column index number) of the temporary data 110 overlapped with the second pooling window 30,32 over a row number (row index number). That is, pooling is performed while increasing the column number of the temporary data 110 overlapped with the second pooling window 30,32 in a state in which the row number thereof is fixed. In one embodiment, in the case where, when reading the temporary data 110 from the memory, another row is to be read only after all of the specific row has been read, it can be easily understood that it is reasonable to move the second pooling window 30,32 by giving priority to the column over the row in this way.

For example, first, in a state in which the row number of the temporary data 110 overlapped with the second pooling window 30,32 is fixed to {1}, pooling may be performed a total of three times while moving the second pooling window 30,32 along the longitudinal direction of the rows. Then, in a state in which the row number of the temporary data 110 overlapped with the second pooling window 30,32 is increased by stride 1 to {2}, pooling may be performed a total of three additional times while moving the second pooling window 30,32 along the longitudinal direction of the rows. This process may be repeated while increasing the row number.

In the present specification, in order to increase the row number (row index number) and column number (column index number), in actual software running on the computing device or hardware of the computing device, variables related to row numbers and column numbers do not necessarily have to be defined and their values not necessarily changed. In the present specification, the concept of increasing the row number (row index number) and column number (column index number) may be developed in various ways.

FIG. 5f illustrates pooled data 200 obtained by pooling the temporary data 110 using the second pooling window 30,32.

A memory space for storing the pooled data 200 may be prepared in advance.

The total number of rows of the memory space, that is, the total number of rows of the pooled data 200, may be equal to the total number of states in which the second pooling window 30,32 may overlap a specific row of the temporary data 110. In other words, the total number of rows in the memory space may be equal to the total number of cases in which the second pooling window 30,32 overlapping the temporary data 110 may be disposed along a longitudinal direction of the rows. For example, in FIG. 5e, when the second pooling window 30,32 overlaps the first row of the temporary data 110, the second pooling window 30,32 may overlap the 11th element pairs {(1,1), (1,2)} of the temporary data 110, the 12th element pairs {(1,2), (1,3)}, the 13th element pairs {(1,3), (1,4)}, or the 14th element pairs {(1,4), (1,5)}. That is, since the total number of states in which the second pooling window 30,32 may overlap a specific row of the temporary data 110 is four, the total number of rows in the memory space is four. That is, the total number of rows of the pooled data 200 is four.

In addition, the total number of columns of the memory space, that is, the total number of columns of the pooled data 200, may be equal to the total number of states in which the second pooling window 30,32 may overlap a specific pair of columns of the temporary data 110. In other words, the total number of columns in the memory space may be equal to the total number of cases in which the second pooling window 30,32 overlapping the temporary data 110 may be disposed along a longitudinal direction of the columns. For example, in FIG. 5e, when the second pooling window 30,32 overlaps the first column and the second column of the temporary data 110, the second pooling window 30,32 may overlap the 11th element pairs {(1,1), (1,2)} of the temporary data 110, the 21st element pairs {(2,1), (2,2)}, or the 31st element pairs {(3,1), (3,2)}. That is, since the total number of states in which the second pooling window 30,32 may overlap a pair of specific columns of the temporary data 110 is three, the total number of columns in the memory space is three. That is, the total number of columns of the pooled data 200 is three.

As illustrated in FIG. 5d, when using the second pooling window 30,32 having sizes of 1 and $R_p$ in the row direction and the column direction, respectively, to move the temporary data 110 having sizes of $C-C_p-1$ and R in the row direction and the column direction, respectively, by one space in the row direction (row stride = 1) and by one space in the column direction (column stride = 1), the pooled data 200 has sizes of $R-R_p+1$ and $C-C_p+1$ in the row direction and the column direction, respectively.

In one preferred embodiment, data pooled by overlapping the second pooling window 30,32 and the element pairs {(i,j), (i,j+1)} of the temporary data 110 is stored in an element (i,j) of the pooled data 200. Here, i is a row index and j is a column index.

In one preferred embodiment, when both conditions below are met, the value of each element of the pooled data 200 may be determined while preferentially increasing the column number of the temporary data 110 over the row number.

* First condition: A condition for performing pooling using the second pooling window 30,32 while preferentially increasing the column number of the temporary data 110 overlapped with the second pooling window 30,32 over the row number.
* Second condition: A condition for storing data pooled by overlapping the second pooling window 30,32 and the element pairs { (i,j), (i,j+1)} of the temporary data 110 in an element (j,i) of the pooled data 200.

In this case, the pooling method by the pooling window 10 in FIG. 2 is the same as the pooling method by the second pooling window 30,32 in FIG. 5. For example, when the pooling method by the pooling window 10 is MAX pooling, the pooling method by the second pooling window 30,32 is also MAX pooling. For another example, when the pooling method by the pooling window 10 is Average pooling, the pooling method by the second pooling window 30,32 is also Average pooling.

The data presented in FIG. 5f may be the same as the data presented in FIG. 4h.

The pooled data 200 illustrated in FIG. 2c, the pooled data 200 illustrated in FIG. 3f, the pooled data 200 illustrated in FIG. 4h and FIG. 5f are identical to each other. That is, the same pooling operation result may be obtained by the method in the related art (FIG. 2), the first embodiment of the present invention (FIG. 3), the second embodiment of the present invention (FIG. 4), and the third embodiment of the present invention (FIG. 5).

In FIGS. 2, 3, 4, and 5, cases where the pooling is MAX pooling is illustrated for convenience of description, but other types of pooling such as MIN pooling or Average pooling may be used.

Hereinafter, the amount of computation for each pooling method is examined.

First, the amounts of computation for performing the pooling operation once using the pooling window 10 having

sizes of $R_p$ and $C_p$, the first pooling window 20 having sizes of 1 and $C_p$, and the second pooling window 30 having sizes of 1 and $R_p$ or $R_p$ and 1 may be defined as $CalA(R_p, C_p)$, $CalA(C_p)$, and $CalA(R_p)$, respectively.

In this case, according to the method presented in FIG. 2, the total amount of computation for pooling operations for obtaining the pooled data 200 is given as Equation 1.

$$[Equation\ 1]$$

$$TCalA1\ =\ CalA(R_p,C_p)\ *\ (R-R_p+1)\ *\ (C-C_p+1)$$

In addition, in both the method presented in FIG. 3 and the method presented in FIG. 4, the total amount of computation for pooling operations for obtaining the pooled data 200 is given as Equation 2.

$$[Equation\ 2]$$

$$TCalA2\ =\ CalA(C_p)\ *\ (R)\ *\ (C-C_p+1)\ +\ CalA(R_p)\ *\ (R-$$

$$R_p+1)\ *\ (C-C_p+1)$$

In this case, it can be understood that, when TCalA1 > TCalA2 holds, the amount of computation of the pooling method according to the embodiment of FIG. 3, FIG. 4, or FIG. 5 is smaller than the amount of computation of the pooling method according to FIG. 2.

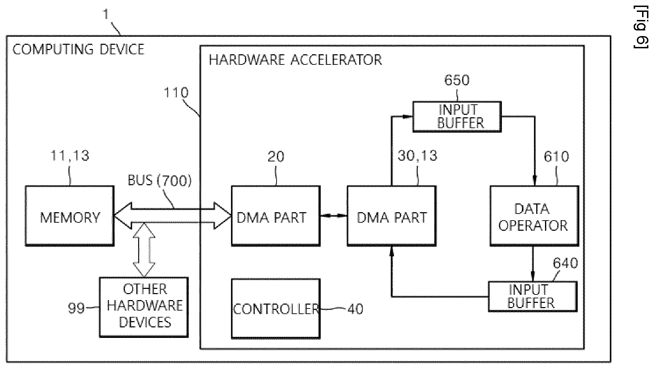

FIG. 6 illustrates an example of a hardware configuration to which a pooling method provided according to one embodiment of the present invention is applicable.

FIG. 6 illustrates some main components of a computing device that implements the above pooling method in hardware.

The computing device 1 may include a dynamic random access memory (DRAM) 130, a hardware accelerator 110, a bus 700 connecting the DRAM 130 and the hardware accelerator 110, and other hardware devices 99 connected to the bus 700.

In addition, the computing device 1 may further include a power unit, a communication unit, a main processor, a user interface, a storage, and peripheral devices, which are not illustrated. The bus 700 may be shared by the hardware accelerator 110 and other hardware devices 99.

The hardware accelerator 110 may include a direct memory access (DMA) part 20, a controller 40, an internal memory 30, an input buffer 650, a data operator 610, and an output buffer 640.

Some or all of data temporarily stored in the internal memory 30 may be provided from the DRAM 130 through the bus 700. In this case, in order to move data stored in the DRAM 130 to the internal memory 30, the controller 40 and the DMA part 20 may control the internal memory 30 and the DRAM 130.

The data stored in the internal memory 30 may be provided to the data operator 610 through the input buffer 650.

Output values generated by the operation of the data operator 610 may be stored in the internal memory 30 through the output buffer 640. The output values stored in the internal memory 30 may be written to the DRAM 130 under the control of the controller 40 and the DMA part 20.

The controller 40 may collectively control the operations of the DMA part 20, the internal memory 30, and the data operator 610.

In one implementation example, the data operator 610 may perform a first operation function during a first time period and a second operation function during a second time period.

In one embodiment, a plurality of data operators 610 illustrated in FIG. 6 may be provided in the hardware accelerator 110 to perform operations requested by the controller 40 in parallel.

In one implementation example, the data operator 610 may output the output data sequentially according to a given order over time rather than all at once.

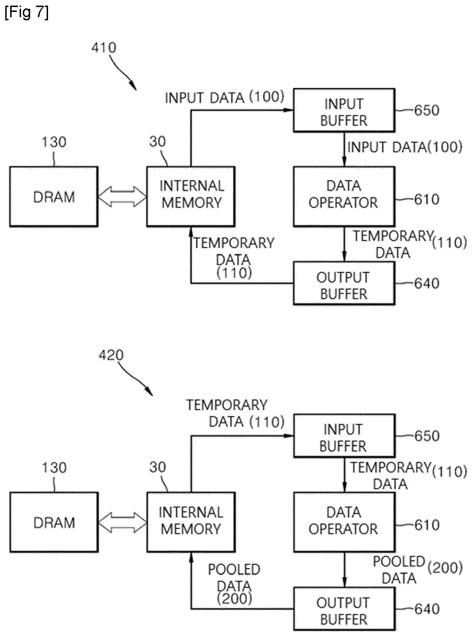

FIG. 7 illustrates a method for implementing the pooling method presented in FIG. 3 or FIG. 5 with the hardware presented in FIG. 6.

A block diagram 410 and a block diagram 420 are each intended to describe operations performed in the internal memory 30, the input buffer 650, and the data operator 610, and the output buffer 640 illustrated in FIG. 6 during a first time period and a second time period.

In the first time period, the input data 100 stored in the internal memory 30 may be provided to the input buffer 650. The input data 100 stored in the input buffer 650 may be provided to the data operator 610. In the first time period, the data operator 610 is configured to generate the temporary data 110 presented in FIG. 3c or FIG. 5c. The temporary data 110 output by the data operator 610 may be provided to the output buffer 640. The temporary data 110 stored in the output buffer 640 may be provided to the internal memory 30. The temporary data 110 stored in the output buffer 640 may be transferred to the external DRAM 130 and then loaded back into the output buffer 640 from the DRAM 130.

In the second time period, the temporary data 110 stored in the internal memory 30 may be provided to the input buffer 650. The temporary data 110 stored in the input buffer 650 may be provided to the data operator 610. In the second time period, the data operator 610 is configured to generate the pooled data 200 presented in FIG. 3f or FIG. 5f. The pooled data 200 output by the data operator 610 may be provided to the output buffer 640. The pooled data 200 stored in the output buffer 640 may be provided to the internal memory 30. The pooled data 200 stored in the output buffer 640 may be transferred to the external DRAM 130 and then loaded back into the output buffer 640 from the DRAM 130.

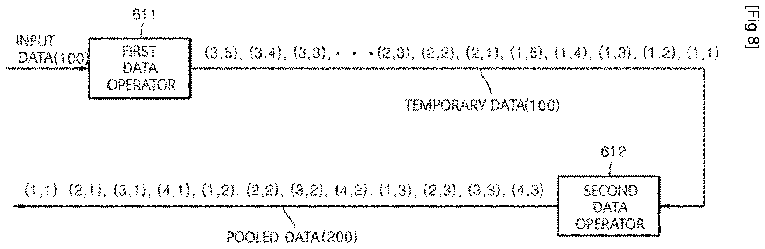

FIG. 8 illustrates an example of implementing the pooling method presented in FIG. 5 using a data operator with a pipeline operation structure.

The data operator 610 presented in FIG. 6 may include a first data operator 611 and a second data operator 612 presented in FIG. 8.

The first data operator 611 is configured to receive the input data 100 in FIG. 5 and output the temporary data 110.

The second data operator 612 is configured to receive the temporary data 110 output by the first data operator 611 and output the pooled data 200 in FIG. 5.

The first data operator 611 may generate and output the element (1,1) first in the temporary data 110 presented in FIG. 5c and generate and output the element (3,5) last.

The second data operator 612 may generate and output the element (1,1) first in the pooled data 200 presented in FIG. 5f and generate and output the element (4,3) last.

When operated in the pipeline manner as illustrated in FIG. 8, the first time period for calculating the temporary data 110 and the second time period for calculating the pooled data 200 may overlap at least partially.

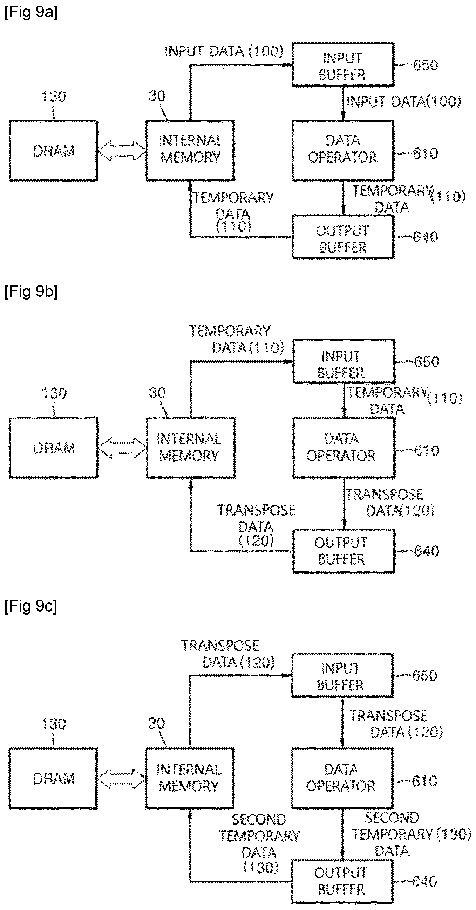

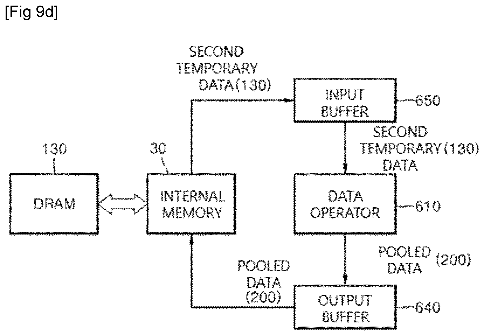

FIGS. 9a, 9b, 9c, and 9d included in the present specification may be collectively referred to as FIG. 9.

FIG. 9 illustrates a method for implementing the pooling method presented in FIG. 4 with the hardware presented in FIG. 6.

FIGS. 9a, 9b, 9c, and 9d are each intended to describe operations performed in the internal memory 30, the input buffer 650, and the data operator 610, and the output buffer 640 illustrated in FIG. 6 during the first time period, the second time period, a third time period, and a fourth time period.

In the first time period, the input data 100 stored in the internal memory 30 may be provided to the input buffer 650. The input data 100 stored in the input buffer 650 may be provided to the data operator 610. In the first time period, the data operator 610 is configured to generate the temporary data 110 presented in FIG. 4c. The temporary data 110 output by the data operator 610 may be provided to the output buffer 640. The temporary data 110 stored in the output buffer 640 may be provided to the internal memory 30. The temporary data 110 stored in the output buffer 640 may be transferred to the external DRAM 130 and then loaded back into the output buffer 640 from the DRAM 130.

In the second time period, the temporary data 110 stored in the internal memory 30 may be provided to the input buffer 650. The temporary data 110 stored in the input buffer 650 may be provided to the data operator 610. In the second time period, the data operator 610 is configured to generate the transpose data 120 presented in FIG. 4d. The transpose data 120 output by the data operator 610 may be provided to the output buffer 640. The transpose data 120 stored in the output buffer 640 may be provided to the internal memory 30. The transpose data 120 stored in the output buffer 640 may be transferred to the external DRAM 130 and then loaded back into the output buffer 640 from the DRAM 130.

In the third time period, the transpose data 120 stored in the internal memory 30 may be provided to the input buffer 650. The transpose data 120 stored in the input buffer 650 may be provided to the data operator 610. In the third time period, the data operator 610 is configured to generate the second temporary data 130 presented in FIG. 4g. The second temporary data 130 output by the data operator 610 may be provided to the output buffer 640. The second temporary data 130 stored in the output buffer 640 may be provided to the internal memory 30.

In the fourth time period, the second temporary data 130 stored in the internal memory 30 may be provided to the input buffer 650. The second temporary data 130 stored in the input buffer 650 may be provided to the data operator 610. In the fourth time period, the data operator 610 is configured to generate the pooled data 200 presented in FIG. 4h. The pooled data 200 output by the data operator 610 may be provided to the output buffer 640. The pooled data 200 stored in the output buffer 640 may be provided to the internal memory 30. The pooled data 200 stored in the output buffer 640 may be transferred to the external DRAM 130 and then loaded back into the output buffer 640 from the DRAM 130.

By using the embodiments of the present invention described above, those skilled in the technical field to which the present disclosure belongs could easily implement various changes and modifications without departing from the scope of the essential characteristics of the present invention. Features of each claim in Claims may be incorporated into other claims that do not depend on or are not depended on by the claim, within the scope that could be understood upon reading the present specification.

\<Acknowledgment\>

The present invention was developed by OPENEDGES Technology Inc. (project implementation agency) in the process of carrying out a research project on the development of multisensory-based context predictive mobile artificial intelligence processors (project ID number 2020001310, task number 2020-0-01310, research period April, 1, 2020 to December, 31, 2024) among Next-generation intelligent semiconductor technology development (design)-artificial intelligence processor business, which is a research project supported by Ministry of Science and ICT and Information and Communications Technology Planning and Evaluation Institute affiliated with the National Research Foundation of Korea.

**Claims**

1. A pooling method for pooling input data (100) expressed as a matrix using a pooling window (10) having sizes of $R_p$ and $C_p$ in a row direction and a column direction, respectively, the pooling method comprising:

   generating, by a computing device, temporary data (110) by pooling the input data (100) using a first pooling window (20) having a size of $C_p$; and
   generating, by the computing device, pooled data (200) by pooling the temporary data using a second pooling window (30) having a size of $R_p$.

2. The pooling method of claim 1, wherein the first pooling window (20) is a window having sizes of 1 and $C_p$ in the row direction and the column direction, respectively, and
   the second pooling window (30,31) is a window having sizes of $R_p$ and 1 in the row direction and the column direction, respectively.

3. The pooling method of claim 1, wherein the generating of the pooled data (200) comprises:

   generating, by the computing device, transpose data (120) by transposing the temporary data (110);
   generating, by the computing device, second temporary data (130) by pooling the transposing data (120) using the second pooling window (30,32); and
   generating, by the computing device, the pooled data (200) by transposing the second temporary data (130).

4. The pooling method of claim 3, wherein the first pooling window (20) is a window having sizes of 1 and $C_p$ in the row direction and the column direction, respectively, and
   the second pooling window (30,32) is a window having sizes of 1 and $R_p$ in the row direction and the column direction, respectively.

5. The pooling method of claim 1, wherein the input data (100) has sizes of R and C in the row direction and the column direction, respectively,

   the temporary data (110) has sizes of $C-C_p+1$ and R in the row direction and the column direction, respectively,
   the pooled data (200) has sizes of $R-R_p+1$ and $C-C_p+1$ in the row direction and the column direction, respectively,
   data pooled by overlapping element pairs {(i,j), (i,j+1), ... (i,j+$C_P$-1)} of the input data (100) and the first pooling window (20) is stored in an element (j,i) of the temporary data (110) (i is a row index and j is a column index), and
   data pooled by overlapping element pairs {(i,j), (i,j+1), ..., (i,j+$R_p$-1)} of the temporary data (110) and the second pooling window (30,32) is stored in an element (j,i) of the pooled data (200) (i is a row index and j is a column index).

6. The pooling method of claim 5, wherein the first pooling window (20) is a window having sizes of 1 and $C_p$ in the row direction and the column direction, respectively, and
   the second pooling window (30,32) is a window having sizes of 1 and $R_p$ in the row direction and the column direction, respectively.

7. The pooling method of claim 1, wherein a row stride and a column stride of the first pooling window are 1 and 1, respectively.

8. The pooling method of claim 1, wherein a row stride and a column stride of the second pooling window are 1 and 1, respectively.

9. The pooling method of claim 1, wherein the pooling is any one of MAX pooling, MIN pooling, and Average pooling.

10. The pooling method of claim 1, wherein a row stride of the first pooling window is $R_p/2$ or less,

   a column stride of the first pooling window is $C_p/2$ or less,
   a row stride of the second pooling window is $R_p/2$ or less, and
   a column stride of the third pooling window is $C_p/2$ or less.

11. A hardware accelerator performing a pooling method for pooling input data (100) expressed as a matrix using a pooling window (10) having sizes of $R_p$ and $C_p$ in a row direction and a column direction, respectively, the hardware accelerator comprising:

   a controller (40);
   an internal memory (30); and
   a data operator (610),
   wherein the controller is configured to cause the data operator to perform operations of:

      generating temporary data (110) by pooling the input data (100) using a first pooling window (20) having a size of $C_p$ in a first time period; and
      generating pooled data (200) by pooling the temporary data using a second pooling window (30) having a size of $R_p$ in a second time period after the first time period.

12. The hardware accelerator of claim 11, wherein the input data (100) has sizes of R and C in the row direction and the column direction, respectively,

   the temporary data (110) has sizes of $C-C_p+1$ and R in the row direction and the column direction, respectively,
   the pooled data (200) has sizes of $R-R_p+1$ and $C-C_p+1$ in the row direction and the column direction, respectively,
   data pooled by overlapping element pairs {(i,j), (i,j+1), ... (i,j+$C_P$-1)} of the input data (100) and the first pooling window (20) is stored in an element (j,i) of the temporary data (110) (i is a row index and j is a column index), and
   data pooled by overlapping element pairs {(i,j), (i,j+1), ..., (i,j+$R_p$-1)} of the temporary data (110) and the second pooling window (30,32) is stored in an element (j,i) of the pooled data (200) (i is a row index and j is a column index).

13. The hardware accelerator of claim 12, wherein the first pooling window (20) is a window having sizes of 1 and $C_p$ in the row direction and the column direction, respectively, and
   the second pooling window (30,32) is a window having sizes of 1 and $R_p$ in the row direction and the column direction, respectively.

14. A computing device comprising:

   the hardware accelerator of any one of claims 11 to 13;
   a memory (11); and
   a bus (700) that is a data exchange path between the memory and the hardware accelerator.

[Fig 1]

[Fig 2a]

10

$C_p$

$R_p$

[Fig 2b]

100

10

Stride=1

Stride=1

| 1,1 | 1,2 | 1,3 | 1,4 | 1,5 |
|-----|-----|-----|-----|-----|
| 2,1 | 2,2 | 2,3 | 2,4 | 2,5 |
| 3,1 | 3,2 | 3,3 | 3,4 | 3,5 |
| 4,1 | 4,2 | 4,3 | 4,4 | 4,5 |
| 5,1 | 5,2 | 5,3 | 5,4 | 5,5 |

R

C

[Fig 2c]
200

|     |     |     |
|-----|-----|-----|
| 1,1 | 1,2 | 1,3 |
| 2,1 | 2,2 | 2,3 |
| 3,1 | 3,2 | 3,3 |
| 4,1 | 4,2 | 4,3 |

$R-R_p+1$

$C-C_p+1$

[Fig 3a]
20

$C_p$

[Fig 3b]
100

Stride=1   20

Stride=1

|     |     |     |     |     |
|-----|-----|-----|-----|-----|
| 1,1 | 1,2 | 1,3 | 1,4 | 1,5 |
| 2,1 | 2,2 | 2,3 | 2,4 | 2,5 |
| 3,1 | 3,2 | 3,3 | 3,4 | 3,5 |
| 4,1 | 4,2 | 4,3 | 4,4 | 4,5 |
| 5,1 | 5,2 | 5,3 | 5,4 | 5,5 |

$R$

$C$

[Fig 3c]

110

| | | |
|---|---|---|
| 1,1 | 1,2 | 1,3 |
| 2,1 | 2,2 | 2,3 |
| 3,1 | 3,2 | 3,3 |
| 4,1 | 4,2 | 4,3 |
| 5,1 | 5,2 | 5,3 |

} R

$C-C_p+1$

[Fig 3d]

30,31

} $R_p$

[Fig 3e]

110

30,31

Stride=1

| 1,1 | 1,2 | 1,3 |
| 2,1 | 2,2 | 2,3 |
| 3,1 | 3,2 | 3,3 |
| 4,1 | 4,2 | 4,3 |
| 5,1 | 5,2 | 5,3 |

Stride=1

[Fig 3f]

200

| 1,1 | 1,2 | 1,3 |
| 2,1 | 2,2 | 2,3 |
| 3,1 | 3,2 | 3,3 |
| 4,1 | 4,2 | 4,3 |

$R-R_p+1$

$C-C_p+1$

[Fig 4a]

20

$C_p$

[Fig 4b]

[Fig 4c]

[Fig 4d]

120

| 1,1 | 1,2 | 1,3 | 1,4 | 1,5 |
| 2,1 | 2,2 | 2,3 | 2,4 | 2,5 |
| 3,1 | 3,2 | 3,3 | 3,4 | 3,5 |

$C-C_p+1$

R

[Fig 4e]

30,32

$R_p$

[Fig 4f]

120

30,32

Stride=1

Stride=1

| 1,1 | 1,2 | 1,3 | 1,4 | 1,5 |
| 2,1 | 2,2 | 2,3 | 2,4 | 2,5 |
| 3,1 | 3,2 | 3,3 | 3,4 | 3,5 |

[Fig 4g]

130

| | | | |
|-----|-----|-----|-----|
| 1,1 | 1,2 | 1,3 | 1,4 |
| 2,1 | 2,2 | 2,3 | 2,4 |
| 3,1 | 3,2 | 3,3 | 3,4 |

$C-C_p+1$

$R-R_p+1$

[Fig 4h]

200

| | | |
|-----|-----|-----|
| 1,1 | 1,2 | 1,3 |
| 2,1 | 2,2 | 2,3 |
| 3,1 | 3,2 | 3,3 |
| 4,1 | 4,2 | 4,3 |

$R-R_p+1$

$C-C_p+1$

[Fig 5a]

20

$C_p$

[Fig 5b]

[Fig 5c]

[Fig 5d]

[Fig 5e]

110

30,32

Stride=1

Stride=1

| | | | | |
|---|---|---|---|---|
| 1,1 | 1,2 | 1,3 | 1,4 | 1,5 |
| 2,1 | 2,2 | 2,3 | 2,4 | 2,5 |
| 3,1 | 3,2 | 3,3 | 3,4 | 3,5 |

[Fig 5f]

200

| | | |
|---|---|---|
| 1,1 | 1,2 | 1,3 |
| 2,1 | 2,2 | 2,3 |
| 3,1 | 3,2 | 3,3 |
| 4,1 | 4,2 | 4,3 |

$R-R_p+1$

$C-C_p+1$

[Fig 6]

[Fig 7]

[Fig 8]

INPUT DATA(100) → FIRST DATA OPERATOR (611)

(3,5), (3,4), (3,3), · · · (2,3), (2,2), (2,1), (1,5), (1,4), (1,3), (1,2), (1,1)

TEMPORARY DATA(100)

SECOND DATA OPERATOR (612)

(1,1), (2,1), (3,1), (4,1), (1,2), (2,2), (3,2), (4,2), (1,3), (2,3), (3,3), (4,3)

POOLED DATA(200)

[Fig 9a]

[Fig 9b]

[Fig 9c]

[Fig 9d]

## INTERNATIONAL SEARCH REPORT

| International application No. |
|---|
| **PCT/KR2021/014771** |

**A.    CLASSIFICATION OF SUBJECT MATTER**

G06N 3/063(2006.01)i; G06F 7/523(2006.01)i; G06F 7/50(2006.01)i; G06F 17/16(2006.01)i

According to International Patent Classification (IPC) or to both national classification and IPC

**B.    FIELDS SEARCHED**

Minimum documentation searched (classification system followed by classification symbols)

G06N 3/063(2006.01); G06F 12/0875(2016.01); G06K 9/46(2006.01); G06N 3/02(2006.01); G06N 3/04(2006.01); G06N 3/08(2006.01); H04N 9/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 풀링(pooling), 윈도우(window), 크기(size), 임시 데이터(temporary data), 행방향 (row direction), 열방향(column direction)

**C.    DOCUMENTS CONSIDERED TO BE RELEVANT**

| Category* | Citation of document, with indication, where appropriate, of the relevant passages | Relevant to claim No. |
|---|---|---|
| Y | US 2021-0073569 A1 (SZ DJI TECHNOLOGY CO., LTD.) 11 March 2021 (2021-03-11) See paragraphs [0018], [0022]-[0028], [0047] and [0056]; and figures 1 and 7. | 1-4,7-11,14 |
| A | | 5-6,12-13 |
| Y | KR 10-2021-0036715 A (SAMSUNG ELECTRONICS CO., LTD. et al.) 05 April 2021 (2021-04-05) See paragraphs [0019] and [0042]-[0045]; and figure 5. | 1-4,7-11,14 |
| A | KR 10-2019-0038318 A (INFINEON TECHNOLOGIES AG) 08 April 2019 (2019-04-08) See claims 1-9. | 1-14 |
| A | KR 10-2021-0004229 A (SAMSUNG ELECTRONICS CO., LTD.) 13 January 2021 (2021-01-13) See paragraph [0030]. | 1-14 |

☑ Further documents are listed in the continuation of Box C.      ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **17 February 2022** | **17 February 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2021/014771** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2019-0090858 A (BEIJING HORIZON INFORMATION TECHNOLOGY CO., LTD.) 02 August 2019 (2019-08-02)<br>        See paragraphs [0040]-[0044]. | 1-14 |

**INTERNATIONAL SEARCH REPORT**
**Information on patent family members**

International application No.

**PCT/KR2021/014771**

| Patent document cited in search report | | | Publication date (day/month/year) | Patent family member(s) | | | Publication date (day/month/year) |
|---|---|---|---|---|---|---|---|
| US | 2021-0073569 | A1 | 11 March 2021 | CN | 110383330 | A | 25 October 2019 |
| | | | | WO | 2019-227322 | A1 | 05 December 2019 |
| KR | 10-2021-0036715 | A | 05 April 2021 | CN | 112561045 | A | 26 March 2021 |
| | | | | EP | 3798921 | A1 | 31 March 2021 |
| | | | | US | 2021-0097403 | A1 | 01 April 2021 |
| KR | 10-2019-0038318 | A | 08 April 2019 | DE | 102018123143 | A1 | 04 April 2019 |
| | | | | JP | 2019-079505 | A | 23 May 2019 |
| | | | | US | 10482337 | B2 | 19 November 2019 |
| | | | | US | 2019-0102640 | A1 | 04 April 2019 |
| KR | 10-2021-0004229 | A | 13 January 2021 | US | 2021-0006755 | A1 | 07 January 2021 |
| KR | 10-2019-0090858 | A | 02 August 2019 | CN | 110050267 | A | 23 July 2019 |
| | | | | EP | 3552112 | A1 | 16 October 2019 |
| | | | | JP | 2020-513637 | A | 14 May 2020 |
| | | | | JP | 6961011 | B2 | 05 November 2021 |
| | | | | US | 10241837 | B2 | 26 March 2019 |
| | | | | US | 2018-0173571 | A1 | 21 June 2018 |
| | | | | US | 2019-0179674 | A1 | 13 June 2019 |
| | | | | US | 2020-0065154 | A1 | 27 February 2020 |
| | | | | WO | 2018-103736 | A1 | 14 June 2018 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10713816 B